# EUROPÄISCHE PATENTSCHRIFT

(11) **EP 0 696 355 B1**
(45) Veröffentlichungstag und Bekanntmachung des Hinweises auf die Patenterteilung: **19.08.1998**
(21) Anmeldenummer: 95909635.5
(22) Anmeldetag: 16.02.1995
(51) Int. Cl.: G01P 21/02, G01P 3/481

(54) **ADAPTIONSVORRICHTUNG FÜR EIN GEBERRAD AN EINEM VERBRENNUNGSMOTOR**
ADAPTATION DEVICE FOR A SENSOR WHEEL ON AN INTERNAL COMBUSTION ENGINE
SYSTEME D'ADAPTATION D'UNE ROUE DE CAPTEUR SUR UN MOTEUR A COMBUSTION INTERNE

(30) Priorität: 01.03.1994 DE 4406606
(43) Veröffentlichungstag der Anmeldung: 14.02.1996
(73) Patentinhaber: ROBERT BOSCH GMBH, 70442 Stuttgart (DE); AUDI AG, 85045 Ingolstadt (DE)
(72) Erfinder: MEZGER, Manfred, D-71706 Markgröningen (DE); KLENK, Martin, D-71522 Backnang (DE); BÖHMLER, Heinz, D-74385 Pleidelsheim (DE); MISCHKER, Karsten, D-71229 Leonberg (DE); RIES-MÜLLER, Klaus, D-74906 Bad Rappenau (DE); WIMMER, Wolfgang, D-74235 Erlenbach (DE)
(86) Internationale Anmeldenummer: DE9500201
(87) Internationale Veröffentlichungsnummer: WO9523974

(56) Entgegenhaltungen:
- EP-A- 0 039 900
- WO-A-93/07497
- DE-A- 2 902 815
- US-A- 4 216 419

## Beschreibung

Die Erfindung betrifft eine Vorrichtung zur Adaption von Toleranzen bei der Messung winkelmäßiger Segmentlängen eines segmentierten Geberrades, das z. B. an der Kurbelwelle eines Verbrennungsmotors angebracht ist.

### Stand der Technik

Eine Vorrichtung gemäß dem Oberbegriff der unabhängigen Ansprüche 1 und 2 ist aus dem Dokument DE-A-41 33 679 bekannt. Die dort beschriebene Vorrichtung verfügt auch über eine Lernfortschritt-Ermittlungseinrichtung, wie sie im Kennzeichen des beigefügten Anspruchs 3 genannt ist, sowie über eine Vergleichseinrichtung, wie sie im Kennzeichen des beigefügten Anspruchs 4 genannt ist.

Ein Geberrad an einem Verbrennungsmotor kann so einjustiert sein, daß es immer dann ein Meßsignal über einen Meßwertaufnehmer liefert, wenn sich jeweils ein Kolben in seinem oberen Totpunkt befindet. Zu diesem Zweck weist ein Geberrad an einem Sechszylindermotor drei Zähne, die sich jeweils über 60° erstrecken, sowie drei zwischen den Zähnen liegende Abschnitte mit geringerem Raddurchmesser auf, die sich ebenfalls über jeweils 60° erstrecken. An jeder ansteigenden und abfallenden Zahnflanke liefert der Meßwertaufnehmer ein Meßsignal. Das ebenbeschriebene Geberrad verfügt bei der ebenbeschriebenen Funktion über sechs Segmente. Werden beim selben Geberrad nur die ansteigenden Zahnflanken berücksichtigt, verfügt es über drei Segmente von jeweils 120° Länge. Im folgenden wird der Einfachheit halber nur auf ein Geberrad mit drei Segmenten Bezug genommen. Für die Erfindung ist die Anzahl der Segmente und deren Lage unerheblich.

Wenn das Geberrad sich mit einer bestimmten Drehzahl dreht und durch Auszählen von Zeitimpulsen die Zeitdauer zwischen zwei Segmentanfängen festgestellt wird, möge sich z. B. der Zählwert 100 für jedes Segment eines idealen Geberrads ergeben, also insgesamt der Zählwert 300 für eine gesamte Umdrehung des Geberrades. In der Praxis werden jedoch aufgrund verschiedener Toleranzen ungleichmäßige Zählwerte erhalten, z. B. der Zählwert 101 für das erste Segment, der Zählwert 97 für das zweite Segment und der Zählwert 102 für das dritte Segment. Werden die mit Hilfe des Geberrades erzeugten Meßsignale für genaue Weiterverarbeitungsalgorithmen benötigt, müssen diese tatsächlichen Segmentlängen statt der idealen berücksichtigt werden. Hierzu ist eine Adaption erforderlich, die im Beispielsfall vom Zählwert 100 für jedes Segment ausgeht, dann aber auf die genannten genauen Werte hin adaptiert. Sind auf diese Weise die Segmentlängen bei einer festen Drehzahl genau ausgemessen worden, können diese genau ermittelten Segmentlängen anschließend dazu verwendet werden, durch erneute Zeitmessungen Drehzahländerungen des Geberrades sehr genau zu ermitteln.

Aus dem vorstehenden Beispiel ist ohne weiteres erkennbar, daß bei festem Zeittakt der für eine Segmentlänge erhaltene Zählwert von der Drehzahl des Geberrades abhängt. Um hinsichtlich der Länge eines Segmentes von der Drehzahl unabhängig zu werden, ist es sinnvoll, eine Normierung vorzunehmen. Dies kann z. B. durch Bezugnahme auf den Zählwert für eine gesamte Umdrehung erfolgen. Im vorigen Beispiel hätte dann jedes ideale Segment die Länge 100/300, während beim realen Geberrad des Beispieles die einzelnen Segmente die Längen 101/300, 97/300 bzw. 102/300 aufweisen. Es kann jedoch auch auf ein bestimmtes der Segmente Bezug genommen werden, so daß z. B. das erste Segment die Länge 101/101, das zweite die Länge 97/101 und das dritte die Länge 102/101 aufwiese. Dies ist insbesondere dann möglich, wenn keine Absolutmessung der Drehzahl erforderlich ist, sondern es ausreicht, eine prozentuale Drehzahländerung zu ermitteln. Weiterhin ist es möglich, die Länge eines beliebigen Segmentes willkürlich auf Eins zu setzen und die Längenabweichung der anderen Segmente zu diesem ausgewählten Segment festzustellen. Im Beispielsfall bedeutet dies, daß das zweite Segment um 4/101 kürzer ist als das erste, des dritte dagegen um 1/101 länger.

Es sei darauf hingewiesen, daß es für die Erfindung völlig unerheblich ist, wie die Länge eines Segments erfaßt wird, d. h. ob absolut oder relativ, ob bezogen auf eine Gesamtumdrehung oder bezogen auf ein ausgewähltes Segment oder ob als Differenz.

Bei der im oben genannten Dokument DE-A-41 33 679 beschriebenen Vorrichtung ist ein Bezugssegment als Einheitssegment ausgewählt, und die Längen der anderen Segmente werden durch Differenzen gegenüber dieser Einheitslänge gekennzeichnet. In der folgenden Beschreibung wird jedoch der Einfachheit halber davon ausgegangen, daß die Längen von jeweils drei Segmenten in gleicher Art und Weise erfaßt werden, nämlich bezogen auf die Zeit, die das Geberrad jeweils für eine gesamte Umdrehung benötigt.

Bisher wurde davon ausgegangen, daß die Segmentlängen mit Hilfe einer Zeitmessung bei konstanter Drehzahl erfaßt werden. In der Praxis ist allerdings die Drehzahl nie konstant, was bei der Messung der Segmentlängen berücksichtigt werden muß. Werden bei einer ersten Umdrehung die oben genannten 300 Takte gezählt, bei einer zweiten Umdrehung des Geberrades aber 303 Takte, kann man z. B. annehmen, über jedes Segment hätte sich die Drehzahl entsprechend einem Takt erhöht. Dieser eine Takt ist dann von der tatsächlich gemessenen Länge abzuziehen. Im ebengenannten Beispielsfall mit etwas beschleunigter Umdrehung des Geberrades würden sich für das erste Segment nicht 101, sondern 102 Takte ergeben, wovon ein Takt abzuziehen wäre, so daß wieder der richtige Wert von 101 Takten erhalten würde (was dann noch auf die 300 Takte für eine Gesamtumdrehung zu beziehen wäre). Eine derartige einfache lineare Umrechnung ist im genannten Dokument DE-A-41 33 679 beschrieben. Es können jedoch auch aufwendigere Drehzahlkorrekturverfahren verwendet werden, wie sie z. B. in den Dokumenten DE-A-40 09 285 und DE-A-41 38 765 in Zusammenhang mit der Erfassung von Laufunruhewerten beschrieben sind. Es wird darauf hingewiesen, daß es für die Erfindung unerheblich ist, wie Drehzahländerungen bei der Erfassung korrigierter Meßsignale berücksichtigt werden.

Mit den korrigierten Meßsignalen erfolgt die oben genannte Adaption. Eine Adaption ist dem Grunde nach nichts anderes als das, daß ein Wert an einen Mittelwert eines relativ stark streuenden Wertes angepaßt wird. Die Mittelwertbildung kann auf beliebige Weise erfolgen, z. B. durch Bilden des arithmetischen Mittelwerts einer Vielzahl von Meßwerten, durch Herausfinden des Medianwertes oder, was bei digitaler Datenverarbeitung die fast ausschließlich verwendete Vorgehensweise ist, durch Verwenden eines Filters erster Ordnung, das so arbeitet, daß es einen jeweils neuen Meßwert nur mit sehr schwacher Gewichtung zum bisherigen Mittelwert dazuaddiert, um einen neuen Mittelwert zu bilden. Diese letztgenannte Adaption ist auch im Dokument DE-A-41 33 679 beschrieben. Für die Erfindung ist der Adaptionsalgorithmus jedoch unerheblich.

Beim Ausführen von Adaptionsverfahren interessiert in aller Regel, wie groß der Lernfortschritt seit dem Start des Verfahrens bereits ist. Die einfachste Vorrichtung, die zum Erfassen des Lernfortschritts verwendet werden kann, ist ein Adaptionsschrittzähler, der einfach zählt, wie häufig der Adaptionswert bei der Mittelwertbildung bereits durch neue Meßwerte verändert wurde. Durch praktische Versuche läßt sich für jeden Anwendungsfall eine Schwellenzahl ermitteln, ab der man darauf vertrauen kann, daß der Adaptionswert die tatsächlichen Verhältnisse mit hoher Genauigkeit wiedergibt. Eine andere Möglichkeit ist es, die Änderung des Adaptionswertes für eine vorgegebene Anzahl von Adaptionsschritten zu untersuchen, da sich bekanntlich ein Adaptionswert dann besonders stark ändert, wenn er noch weit vom Endwert entfernt ist, er sich dagegen kaum mehr ändert, wenn er schon beinahe mit dem Endwert übereinstimmt. Im Dokument DE-A-41 33 679 ist noch eine weitere Variante angegeben, nämlich eine Mittelwertbildung in Form eines Filters erster Ordnung, das die Differenz zwischen dem aktuellen Adaptionswert und dem aktuellen Meßwert filtert. Im Idealfall läuft der Ausgangswert des Lernfilters auf den Wert Null hin. In der Praxis wird ein Erfolgssignal für ausreichendes Lernen bereits dann ausgegeben, wenn der Ausgangswert des Filters, d. h. das Lernfortschrittssignal, einen vorgegebenen Schwellenwert unterschreitet.

Eine sehr genaue Adaption für die Längen der Segmente eines Geberrades ist vor allem dann erforderlich, wenn die Segmentlängen dazu verwendet werden, Drehzahländerungen mit sehr hoher Genauigkeit zu erfassen, wie sie z. B. durch Zündausfälle bedingt sind. Aus solchen Drehzahländerungen wird ein sogenannter Laufunruhewert berechnet, wozu Algorithmen verwendet werden können, wie sie übersichtsmäßig in den bereits obengennannten Dokumenten DE-A-40 09 285 und DE-A-41 38 765 geschildert werden. In Zusammenhang mit der vorliegenden Erfindung ist es unerheblich, wie Laufunruhewerte bestimmt werden. Um festzustellen, ob im Verbrennungsmotor, an dessen Kurbelwelle das genannte Geberrad befestigt ist, unzulässig viele Aussetzer auftreten, wird der Laufunruhewert mit einem Schwellenwert verglichen. Idealerweise hat der Laufunruhewert den Wert Null, wenn keinerlei Aussetzer auftreten, alle nicht durch Aussetzer bedingten Drehzahländerungen kompensiert werden können und schließlich mit Hilfe des Geberrades exakte Drehzahländerungsmessungen ausgeführt werden können. Wären alle drei Bedingungen ideal erfüllt, könnte der Schwellenwert den Wert Null haben. In der Praxis ist er jedoch von Null verschieden und kann, wie dies im Dokument DE-A-41 33 679 erläutert ist, abhängig vom Lernfortschritt bei der Adaption verändert werden. Liefert nämlich das Geberrad zu Beginn einer Adaption noch ungenaue Meßwerte, erreicht der Laufunruhewert allein aufgrund dieser Ungenauigkeiten bereits eine bestimmte Größe, auch wenn keinerlei Aussetzer auftreten. Je besser die Adaption wird, desto kleiner werden durch Meßungenauigkeiten bedingte Vergrößerungen des Laufunruhewertes. Daher kann der Schwellenwert zum Vergleich mit dem aktuellen Laufunruhewert mit fortschreitender Adaption verringert werden oder sein Minimalwert kann auf einen immer kleineren Wert festgelegt werden. Gemäß dem ebengenannten Dokument erfolgt die Umstellung des genannten Schwellenwerts in einem Schritt, nämlich dann, wenn das Erfolgssignal für den Lernfortschritt ausgegeben wird. Zu diesem Zeitpunkt wird die Erhöhung oder untere Begrenzung des genannten Schwellenwertes aufgehoben.

Wenn die vorstehend genannten Prinzipien angewandt werden, kann die Adaption eine Genauigkeit von Bruchteilen eines Promilles der Länge eines Segments erreichen. Es hat sich jedoch gezeigt, daß diese Genauigkeit in der Praxis immer noch nicht ausreicht, um Aussetzer in einem Verbrennungsmotor zuverlässig erkennen zu können.

### Darstellung der Erfindung

Der Erfindung liegt die Aufgabe zugrunde, eine Vorrichtung zur Adaption von Toleranzen bei der Messung winkelmäßiger Segmentlängen eines segmentierten Geberrades anzugeben, die noch genauere Adaptionswerte liefert als bisherige derartige Vorrichtungen.

Die erfindungsgemäße Vorrichtung ist durch die Lehren der nebengeordneten Ansprüche 1 bzw. 2 gegeben. Diesen Lehren ist das erfinderische technische Prinzip gemeinsam, daß für mindestens ein Segment nicht nur ein einziger Adaptionswert erfaßt wird sondern mindestens zwei Adaptionswerte, die drehzahlabhängig sind. Dieses Prinzip beruht auf der Erkenntnis, daß die Längen der Segmente eines Geberrades in der Praxis nicht bei allen Drehzahlen immer gleich gemessen werden. Jedoch ist offensichtlich, daß sich die Länge eines Segments nicht ändert, so daß die drehzahlbedingte Änderung der gemessenen Länge zu korrigieren ist, was auch bei der Adaption zu berücksichtigen ist.

Bei der Vorrichtung gemäß Anspruch 1 weist jede Mittelungseinrichtung, die eine Adaption ausführt, mindestens zwei Mittelungs-Untereinrichtungen auf, denen jeweils ein Drehzahlbereich zugeordnet ist, während bei der Vorrichtung gemäß Anspruch 2 jeder der Mittelungs-Untereinrichtungen eine Drehzahl statt eines Drehzahlbereichs zugeordnet ist, wobei sich allerdings um diese vorgegebenen Drehzahlen herum ebenfalls Bereiche erstrecken, die sich jedoch überlappen können, was mit Hilfe verschiedener Gewichtungen berücksichtigt wird.

Wie oben ausgeführt, beruht die Erfindung auf der Erkenntnis, daß die Segmentlängenmessung drehzahlabhängig ist. Es hat sich herausgestellt, daß diese Abhängigkeit stark nichtlinear ist. So treten ausgeprägte Resonanzbereiche auf, in denen der Meßfehler im Vergleich zu Bereichen ohne Resonanz einige hundertstel Grad beträgt. Liegt ein solcher Resonanzbereich, der sich z. B. über einen Drehzahlbereich von 200 U/min erstreckt, in einem einer Mittelungs-Untereinrichtung zugeordneten Bereich von z. B. 1000 U/min, können Probleme auftreten. Erfolgte die Adaption zufälligerweise innerhalb des genannten Bereichs von 1000 U/min in einem Teilbereich außerhalb des Resonanzbereichs, gilt für den Resonanzbereich ein ungenauer Wert. Entsprechendes gilt, wenn innerhalb des Bereichs von 1000 U/min zufällig im Resonanzteilbereich adaptiert wurde und dann dieser Wert auf den anderen Teilbereich angewandt wird. Um Schwierigkeiten begegnen zu können, die hierdurch entstehen können, sieht es die Weiterbildung gemäß Anspruch 5 vor, einen Maximalwertspeicher und einen Minimalwertspeicher für Adaptionswerte in jeder Mittelungs-Untereinrichtung für mindestens ein Segment zu verwenden und die jeweiligen Differenzen zwischen den Werten zu bilden, wie sie in einander zugeordneten Maximalwert- und Minimalwertspeichern abgespeichert sind. In einem Bereich ohne Resonanzteilbereich wird nur eine kleine Differenz zwischen dem Minimalwert und dem Maximalwert bestehen, dagegen eine große in einem Bereich mit Resonanzteilbereich. Wird eine Differenz über einer Schwelle festgestellt, können verschiedene Maßnahmen einzeln oder gemeinsam ergriffen werden. Eine Maßnahme ist die, die Bereichsgrenzen oder die Bezugsdrehzahl für eine Mittelungs-Untereinrichtung so zu verschieben, daß der Resonanzbereich möglichst gesondert erfaßt wird. Im Sinne dieser Maßnahme ist es auch möglich, zusätzliche kleinere Bereiche einzuführen, wenn innerhalb eines großen Bereichs eine Resonanzstelle liegt. Eine andere Maßnahme ist die, bei einer Aussetzererkennung den Schwellenwert zu erhöhen, wenn in einem Drehzahlbereich mit Resonanzteilbereich gemessen wird.

Dadurch, daß die erfindungsgemäße Vorrichtung für jede Segmentlänge mindestens zwei Adaptionswert für voneinander verschiedene Drehzahlbereiche ermittelt, ergeben sich zahlreiche Varianten, wie diese verschiedenen Adaptionswerte bei weiterführenden Algorithmen verwendet werden können, die sich auf die Segmentlängenmessung stützen, z. B. bei Algorithmen zur Laufunruheerkennung. Es ist hier zu beachten, daß die Adaption nicht in allen Drehzahlbereichen gleich schnell fortschreitet. Ein typischer erster Bereich ist z. B. der Drehzahlbereich von ungefähr 1500 U/min bis ungefähr 3000 U/min. In diesem Bereich werden viel häufiger Meßwerte erfaßt als in allen anderen Bereichen. Sobald in diesem Bereich so start gelernt wurde, daß ein Erfolgssignal zufriedenstellenden Lernfortschritt anzeigt, sind die mechanischen Toleranzen des Geberrades, die für alle Drehzahlbereiche unveränderlich sind, sehr gut adaptiert. Daher ist es prinzipiell von Vorteil, die Adaptionswerte für die verschiedenen Segmentlängen, wie sie in dem am häufigsten angefahrenen Drehzahlbereich gelernt wurden, auch für die Adaptionswerte der Segmentlängen in den anderen Drehzahlbereichen übernommen werden. Dann müssen bei der weiteren Adaption in den anderen Drehzahlbereichen nur noch die drehzahlbedingten Toleranzen adaptiert werden.

Außerdem kann abhängig vom Lernfortschritt in den einzelnen Drehzahlbereichen der obengenannte Schwellenwert für die Laufunruheerkennung modifiziert werden. Solange weder mechanische noch drehzahlbedingte Toleranzen adaptiert sind, muß dieser Schwellenwert relativ stark erhöht werden. Wurde aber die Adaption in einem Drehzahlbereich zum Erfolg geführt, kann für diesen Bereich auf eine Erhöhung des Schwellenwerts (oder eine Begrenzung seines Minimalwerts) verzichtet werden. In den übrigen Bereichen kann die Schwelle herabgesetzt werden, da ja keine Fehler mehr durch mechanische Toleranzen mehr auftreten, sondern nur noch drehzahlbedingte Toleranzen. In den weiteren Bereichen wird die Erhöhung des Schwellenwertes erst dann weggenommen, wenn auch dort die Adaption bis zum Erfolg geführt ist. Alternativ zur ebenbeschriebenen Vorgehensweise kann dann, wenn die Adaption zum Erfolg geführt hat, noch eine weitere Überprüfung abgewartet werden, bevor die Schwellenwerterhöhung weggenommen wird. Es handelt sich um die obengenannte Überprüfung mit Hilfe eines Maximal- und Minimalwertes, ob eine Resonanz in einem Drehzahlbereich vorliegt. Gemäß dieser Alternative wird die endgültige Absenkung auf den Wert Null der Schwellenwerterhöhung nur dann vorgenommen, wenn sich herausstellt, daß nur eine relativ kleine Differenz für den Maximal- und Minimalwert vorliegt.

### Zeichnung

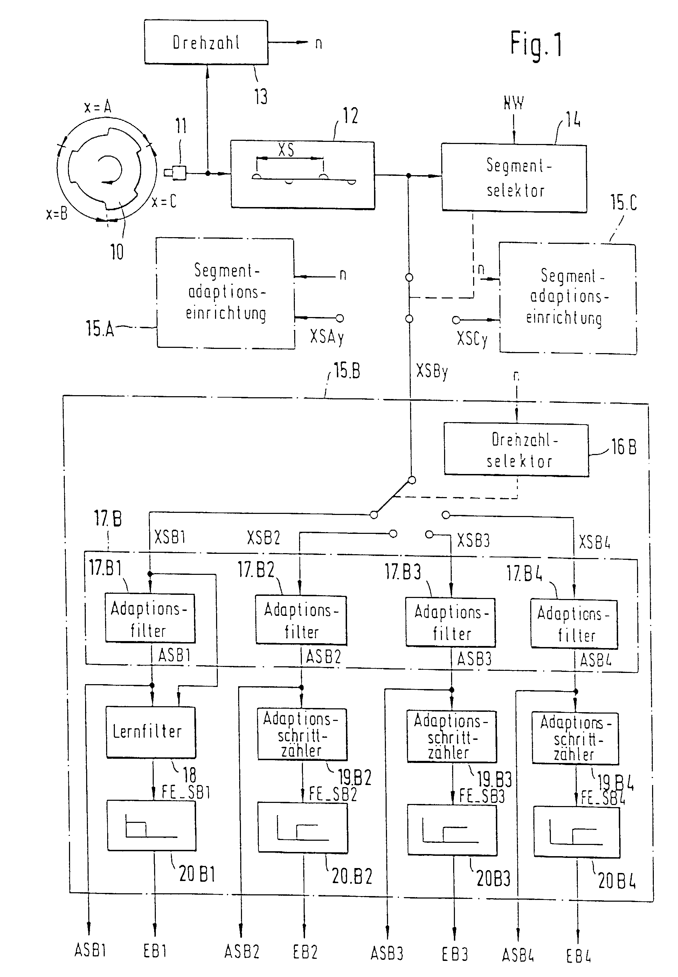

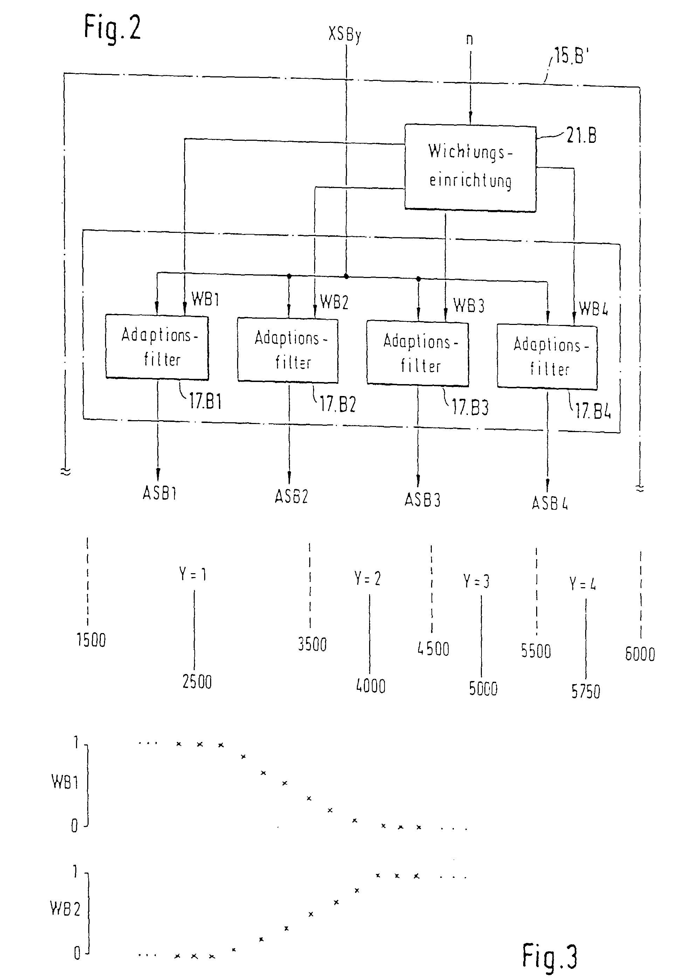

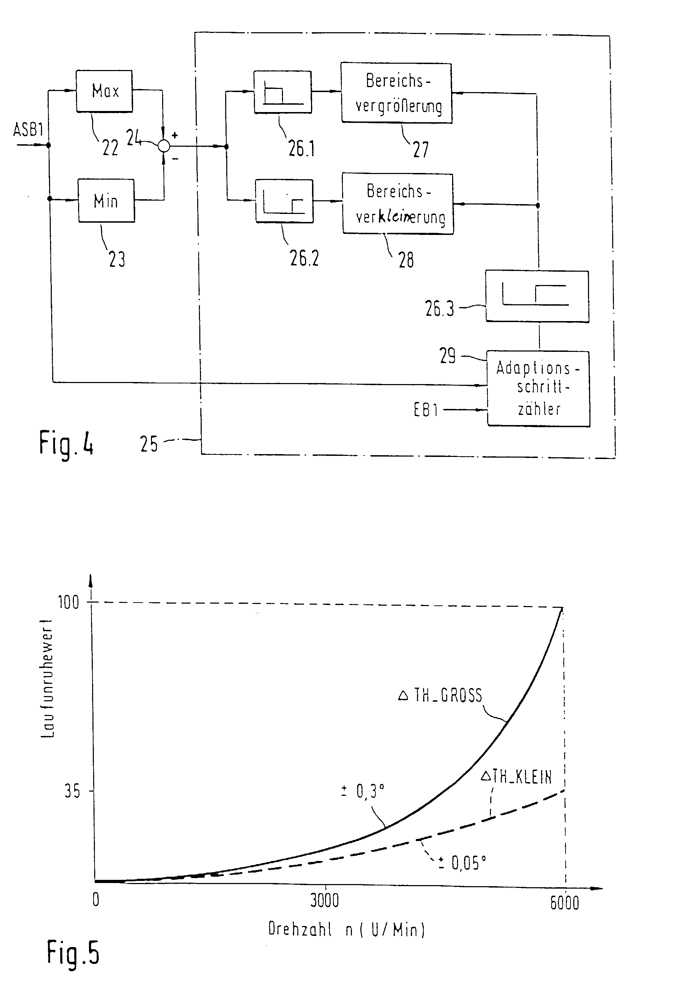

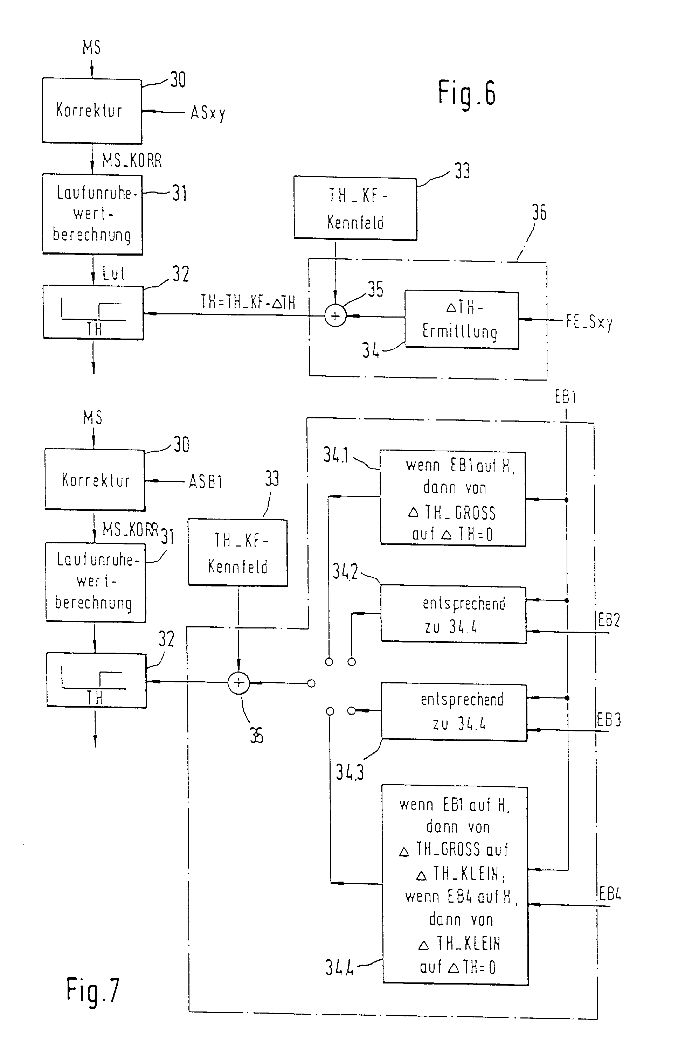

Fig. 1 ist ein Blockfunktionsdiagramm einer ersten Adaptionsvorrichtung für ein Geberrad; Fig. 2 ist ein Teilfunktionsblockdiagramm, das veranschaulicht, wodurch sich eine zweite erfindungsgemäße Vorrichtung von derjenigen gemäß Fig. 1 unterscheidet; Fig. 3 ist ein Diagramm, das Drehzahlbereiche und Gewichtungsfaktoren veranschaulicht; Fig. 4 ist ein Blockfunktionsdiagramm für eine Teilvorrichtung zum Ermitteln von Resonanzteilbereichen in einem Drehzahlbereich; Fig. 5 ist ein Diagramm, das zeigt, wie ein Laufunruhewert drehzahlabhängig von Geberradtoleranzen beeinflußt wird; Fig. 6 ist ein Blockfunktionsdiagramm zum Veranschaulichen, wie ein bei einer Laufunruheuntersuchung verwendeter Schwellenwert abhängig vom Lernfortschritt bei einer Geberradtoleranzadaption modifiziert wird; und Fig. 7 ist ein Blockfunktionsdiagramm zum Veranschaulichen, wie der bei einer Laufunruheuntersuchung verwendete Schwellenwert abhängig von Adaptionsergebnissen für verschiedene Drehzahlbereiche modifiziert wird.

### Beschreibung von Ausführungsbeispielen

Fig. 1 zeigt unter anderem ein Geberrad 10 mit drei Zähnen, die sich jeweils über 60° erstrecken, und drei dazwischenliegenden Lücken von jeweils 60°. Dadurch sind drei Segmente A, B und C aus jeweils einem Zahn und einer Lücke gebildet, die sich idealerweise über jeweils 120° erstrecken. In der Praxis ergeben sich jedoch nicht jeweils 120°, und zwar aufgrund mechanischer Toleranzen des Geberrades als auch aufgrund drehzahlbedinger Abweichungen. Die in Fig. 1 dargestellte Vorrichtung dient dazu, die tatsächliche Länge jedes der Segmente A, B und C möglichst drehzahlunabhängig zu erfassen. Größen, die für alle Segmente gelten, sind in dieser Anmeldung mit dem Suffix x bezeichnet, so daß x also die Werte A, B und C haben kann.

Die Zahnflanken des Geberrades 10 werden von einen Meßwertaufnehmer 11 abgetastet, der ein Meßsignal an eine Segmentlänge-Berechnungseinrichtung 12 ausgibt, die unkorrigierte Segmentlängenwerte XSxy ausgibt, die jedoch auf den Gesamtumfang des Geberrades bezogen sind. Das genannte Meßsignal MS wird auch einer Drehzahl-Ermittlungseinrichtung 13 zugeführt, die daraus die jeweils aktuelle Drehzahl n ermittelt.

Ein Segmentselektor 14 ermittelt mit Hilfe des Segmentlängenwerts und eines Signals, das in Zusammenhang mit einer (nicht dargestellten) Lücke in einem Segment ausgegeben wird, oder eines Nockenwellensignals NW, welches Segment gerade ausgemessen wird. Abhängig davon schaltet er auf eine von drei Segmentadaptionseinrichtung 15.A, 15.B oder 15.C um. Diese erhalten demgemäß Segmentlängenwerte XSAy, XSBy bzw. XSCy sowie jeweils das Drehzahlsignal n. In Fig. 1 ist die Segmentadaptionseinrichtung 15.B für das Segment B detailliert dargestellt. Die beiden anderen Segmentadaptionseinrichtungen 15.A und 15.C sind entsprechend aufgebaut. Die Segmentadaptionseinrichtung 15.B verfügt über einen Drehzahlselektor 16.B, vier Adaptionsfilter 17.B1 bis 17.B4, einen Lernfilter 18, drei Adaptionsschrittzähler 19.B2 bis 19.B4 sowie über vier Vergleichseinrichtungen 20.B1 bis 20.B4.

Der Drehzahlselektor 16.B unterscheidet zwischen vier Drehzahlbereichen, wie sie durch den obersten Teil von Fig. 3 veranschaulicht werden. Der erste Bereich erstreckt sich von 1500 bis 3500 U/min, der zweite geht bis 4500, der dritte bis 5500 und der sechste bis 6000 U/min. Die Drehzahlen liegen in der Praxis meistens im ersten Bereich. Daher ist in Fig. 1 der Ausgang des Drehzahlselektors 16.B auch als auf den ersten Ausgangszweig geschaltet dargestellt. Dadurch wird der Segmentlängenwert XSBy als Wert XSB1 für den ersten Drehzahlbereich weitergeleitet. Es sei darauf hingewiesen, daß im folgenden der Suffix y Drehzahlbereiche oder festgelegte Drehzahlen unterscheidet. Bei allen Beispielen läuft er von 1 bis 4, jedoch ist die Erfindung ab zwei Drehzahlbereichen oder festgelegten Drehzahlen realisierbar. Je mehr Bereiche oder festgelegte Drehzahlen verwendet werden, desto besser werden Drehzahlauswirkungen bei der Adaption theoretisch berücksichtigt. Jedoch ergibt sich in der Praxis dann die Schwierigkeit, daß verschiedene Drehzahlbereiche kaum angefahren werden und daher dort eine Adaption nur sehr langsam erfolgt. Die Verwendung von vier Bereichen stellt einen guten Kompromiß zwischen den beschriebenen Vor- und Nachteilen dar.

Der Segmentlängenwert XSB1 wird im Adaptionsfilter 17.B1 zum Erzeugen eines Adaptionswertes ASB1 gefiltert. Dies kann, wie eingangs erläutert, auf vielerlei Arten erfolgen, z. B. wie im Dokument DE-A-41 33 679 beschrieben. Eine entsprechende Adaption erfolgt in den anderen Adaptionsfiltern 17.B2 bis 17.B4, und zwar in jedem der insgesamt vier Adaptionsfilter für das segment B jeweils dann, wenn der Drehzahlselektor 16.B auf das jeweilige Adaptionsfilter umschaltet, weil die Drehzahl n gerade im entsprechenden der vier obengenannten Bereiche liegt.

Die weiteren Maßnahmen, die innerhalb der Segmentadaptionseinrichtung 15.B ergriffen werden, haben nicht mehr unmittelbar mit der Adaption zu tun, sondern mit der Erfassung des Lernfortschritts bei der Adaption, um abhängig vom Lernfortschritt verschiedene weitere Maßnahmen in Zusammenhang mit Werten ergreifen zu können, die in Zusammenhang mit den Segmentlängenwerten erstellt werden, z. B. zur Verwendung bei Laufunruheauswertungen.

Im Lernfilter 18 wird die Abweichung zwischen dem Adaptionswert ASB1 und dem Segmentlängenwert XSB1 einer Filterung in einem Filter erster Ordnung unterworfen, wie im Dokument DE-A-41 33 679 beschrieben. Der gefilterte Wert FE_SB1 strebt auf den Wert Null zu. Sobald er einen vorgegebenen Schwellenwert überschritten hat, geht das im folgenden als Erfolgssignal bezeichnete Ausgangssignal EB1 der Vergleichseinrichtung 20.B1 von niedrigem Pegel L auf hohen Pegel H.

Die Lernfortschritt-Ermittlungseinrichtungen sind in den Zweigen für die Bereiche 2 bis 4 nicht als Lernfilter, sondern als Adaptionsschrittzähler 19.B2 bis 19.B4 ausgebildet. Jeder dieser Zähler wird immer dann um den Wert Eins inkrementiert, wenn ein neuer Adaptionsschritt erfolgt, weil ein neuer Segmentlängenwert XSBy für den jeweiligen Bereich eingegeben wird. In der Vergleichseinrichtung 20.B2 wird der Zählwert aus dem Adaptionsschrittzähler 19.B2 mit einem Schwellenwert verglichen. Sobald der Schwellenwert überschritten wird, geht das Ausgangssignal der Vergleichseinrichtung 20.B2 vom Pegel L auf den Pegel H. Es wird also das Erfolgssignal EB2 ausgegeben. Entsprechendes gilt für die den Adaptionsschrittzählern 19.B2 und 19.B4 zugeordneten Vergleichseinrichtungen 20.B3 bzw. 20.B4.

Die genaueste Ermittlung des Lernergebnisses ist dann möglich, wenn in allen Zweigen jeweils ein Lernfilter als Lernfortschritt-Ermittlungseinrichtung verwendet wird. Die einfachste Realisierung besteht demgegenüber darin, daß für alle Zweige gemeinsam nur ein einziger Adaptionsschrittzähler verwendet wird. Wenn der Wert dieses Zählers für einen ersten, am häufigsten angefahrenen Drehzahlbereich, eine erste Schwelle von z. B. 5000 Werten überschreitet, wird angenommen, daß dieser Bereich ausreichend adaptiert ist; wenn 3000 neue Werte, nun für den zweiten Bereich, geliefert sind, wird dies für diesen Bereich angenommen; wenn erneut 4000 Werte, nun für den dritten Bereich, geliefert sind, wird dies für den diesen Bereich angenommen; und wenn wieder 4000 Werte, nun für den vierten Bereich, geliefert sind, wird es für diesen Bereich angenommen. Die Durchnumerierung der Bereiche ist hierbei nicht notwendigerweise nach aufsteigenden Drehzahlen geordnet, sondern danach, wie häufig die nach Drehzahlen aufeinanderfolgenden Bereiche jeweils typischerweise angefahren werden, was vorab durch praktische Fahrversuche ermittelt wird.

Fig. 2 zeigt teilweise eine Variante 15.B' zur Segmentadaptionseinrichtung 15.B von Fig. 1, wobei die Unterschiede darin liegen, daß statt eines Drehzahlselektors 16.B eine Wichtungseinrichtung 21.B vorhanden ist und daß die Adaptionsfilter 17.B1 bis 17.B4 alle dauernd gemeinsam mit dem Segmentlängenwert XSBy versorgt werden und sie zusätzlich jeweils einen Gewichtungsfaktor WB1 bis WB4 von der Wichtungseinrichtung 21.B erhalten. Diese Gewichtungsfaktoren WB1 bis WB4 werden bei der Filterung erster Ordnung in den Adaptionsfiltern 17.B1 bis 17.B4 jeweils dazu verwendet, den Filterfaktor zu gewichten, mit dem ein neuer Segmentlängenwert bei der Filterung berücksichtigt wird. Beträgt dieser Filterfaktor ohne Gewichtung, oder beim Gewichtungsfaktor 1, z. B. 0,004, so beträgt er beim Gewichtungsfaktor von 0,5 nur noch 0,002 und der bisherige Adaptionswert wird mit dem gewichteten Faktor 0,998 statt dem ürsprünglichen von 0,996 berücksichtigt. Zur Gewichtung kann aber auch die Anzahl von Meßwerten verändert werden, die zur Mittelungsbildung herangezogne werden. Die Funktion dieser Anordnung sei anhand des mittleren und unteren Teils von Fig. 3 erläutert.

Gemäß Fig. 3 sind für die Variante von Fig. 2 vier Drehzahlen vorgegeben, nämlich solche von 2500, 4000, 5000 und 5750 U/min. Diese liegen gerade jeweils in der Mitte der Drehzahlbereiche 1 bis 4 für das Ausführungsbeispiel von Fig. 1. Liegt nun die Drehzahl bei 4000 U/min, hat der Gewichtungsfaktor WB2 den Wert 1, während die anderen Gewichtungsfaktoren WB1, WB3 und WB4 den Wert 0 aufweisen, was in Fig. 3 für den Gewichtungsfaktor WB1 dargestellt ist. Liegt die Drehzahl bei 2500 U/min, hat dagegen der Gewichtungsfaktor WB1 den Wert 1, während alle anderen den Wert 0 aufweisen. Liegt die Drehzahl dagegen bei etwa 3500 U/min, erfolgt sowohl im Adaptionsfilter 17.B1 als auch im Adaptionsfilter 17.B2 jeweils eine Adaption, bei der der neue Wert nur jeweils mit dem Gewichtungsfaktor 0,5 behandelt wird. Allgemein gilt, daß der Gewichtungsfaktor um so größer ist, je näher die aktuelle Drehzahl bei einer der vorgegebenen Drehzahlen liegt. Die vorgegebenen Drehzahlen werden vorzugsweise so gewählt, daß sie nicht in einem Bereich liegen, in dem die Segmentlängenwerte durch Resonanzeffekte verfälscht werden. Resonanzteilbereiche liegen dann von diesen Drehzahl weg und werden daher nur mit schwächerer Gewichtung berücksichtigt als Werte, die in einem nicht resonanten Teilbereich um eine vorgegebene Drehzahl herum liegen.

In Zusammenhang mit der vorstehend beschriebenen zweiten Variante sei angemerkt, daß bei der Auswertung die Adaptionsergebnisse auch interpoliert werden kann. So kann auch im Fall der bei der Variante von Fig. 1 verwendeten Bereichseinteilung angenommen werden, daß der Adaptionswert für einen jeweiligen Bereich nur genau für die mittlere Frequenz des Bereichs gilt. Wenn z. B. für den zweiten Bereich von 3500 bis 4500 U/min der Adaptionswert 1,005 gilt, wird dieser der Drehzahl 4000 U/min zugeordnet. Im benachbarten dritten Bereich von 4500 bis 5500 U/min sei der Adaptionswert 1,003, der der Drehzahl 5000 U/min zugeordnet wird. Liegt dann aktuell die Drehzahl 4500 U/min in der Mitte zwischen 4000 und 5000 U/min vor, wird zu dieser Drehzahl als Adaptionswert der Mittelwert aus 1,005 und 1,003, also 1,004 als interpolierter Adaptionswert verwendet. Entsprechend kann verfahren werden, wenn unmittelbar, gemäß der zweiten Variante, auf Drehzahlen zur Auswahl eines jeweiligen Adaptionszweiges Bezug genommen wird.

Um mit Schwierigkeiten fertigzuwerden, die von den vorstehend genannten Resonanzteilbereichen herrühren, ist auch die in Fig. 4 dargestellte Weiterbildung vorgesehen. Diese verfügt über einen Maximalwertspeicher 22, einen Minimalwertspeicher 23, eine Differenzbildungseinrichtung 24 und eine Bereichsverstelleinrichtung 25 mit einem ersten Komparator 26.1, einem zweiten Komparator 26.2, einer Bereichsvergröperungseinrichtung 27, einer Bereichsverkleinerungseinrichtung 28, einem dritten Komparator 26.3 und einem Adaptionsschrittzähler 29.Diese Anordnung liegt nur für ein Segment vor, beim Ausführungsbeispiel für das Segment B, aber jeweils gesondert für alle vorgegebenen Drehzahlbereiche. Fig. 4 zeigt den Fall für den ersten Drehzahlbereich.

Sobald die beiden Speicher 22 und 23 das Erfolgssignal EB1 erhalten, speichern sie den aktuellen Adaptionswert ASB1 ein. Außerdem wird der Adaptionsschrittzähler 29 durch dieses Signal auf Null gesetzt. Ab diesem Zeitpunkt beginnt der Adaptionsschrittzähler 29 jeden Adaptionsschritt für den Adaptionswert ASB1 zu zählen. Im Maximalwertspeicher 22 wird der abgespeicherte Wert jeweils dann durch einen neuen überschrieben, wenn der neue Wert größer ist als der bisher eingespeicherte. Im Minimalwertspeicher 23 werden demgegenüber immer kleinere Werte eingetragen. Die Differenzbildungseinrichtung 24 bildet die Differenz zwischen den beiden abgespeicherten Werten und liefert sie an die Bereichsverstelleinrichtung 25. Sobald der dritte Komparator 26.3 feststellt, daß der Zählwert des Adaptionsschrittzählers 29 einen vorgegebenen Zählwert überschreitet, geht sein Ausgangssignal vom Pegel L auf den Pegel H. Wenn dann im ersten Komparator 26.1 festgestellt wird, daß die genannte Differenz unter einem relativ niedrigen ersten Schwellenwert liegt, wird in der Bereichsvergrößerungseinrichtung 27 der erste Bereich vergrößert, z. B. von 1500 bis 4000 U/min statt zuvor von 1500 bis 3500 U/min. Die drei restlichen Bereiche können entsprechend gleichmäßig verkleinert werden. Liegt die genannte Differenz dagegen über einen höheren zweiten Schwellenwert, ist dies ein Zeichen dafür, daß im Bereich eine resonante Stelle liegt. Daher wird der Bereich durch die Bereichsverkleinerungseinrichtung 28 verkleinert, so daß er z. B. nur noch bis 3000 U/min statt bis 3500 U/min geht. Die anderen drei Bereiche werden entsprechend gleichmäßig vergrößert.

Derartige Bereichsvergrößerungen oder -verkleinerungen werden auch für die anderen Bereiche vorgenommen. Dies läuft letztendlich darauf hinaus, daß dann, wenn z. B. zwei Teilresonanzbereiche vorliegen, zwei der insgesamt vier Bereiche auf diese Teilresonanzbereiche beschränkt sind und sich die beiden anderen Bereiche über jeweils ein relativ großes Drehzahlband erstrecken.

Außer zur Bereichsverstellung kann das Ausgangssignal der Differenzbildungseinrichtung 24 auch für andere Zwecke verwendet werden, woraufhin weiter unten in Zusammenhang mit einer Laufunruheerkennung detaillierter hingewiesen wird.

Wie bereits mehrfach erwähnt, werden die vom Meßwertgeber 11 ausgegebenen Meßsignale MS z. B. dazu verwendet, einen Laufunruhewert zu berechnen, der ein Maß dafür ist, ob unzulässig viele Aussetzer in einem Verbrennungsmotor auftreten. Damit in das Meßsignal keine mechanischen Toleranzen des Geberrades und drehzahlabhängige Toleranzen bei der Meßwerterfassung eingehen, erfolgt die vorstehend beschriebene Toleranzadaption. Abhängig davon, für welches Segment x und für welchen Drehzahlbereich y ein Meßwert gerade erfaßt wird, wird er mit Hilfe des zugehörigen Adaptionswertes ASxy für die Segmentlänge korrigiert. Mit dem so korrigierten Meßwert wird dann der Laufunruhewert berechnet. Dies wird durch Fig. 6 veranschaulicht. Dort erfolgt die genannte Korrektur in einer Korrektureinrichtung 30 und die Berechnung des Laufunruhewertes in einer Laufunruhewert-Berechnungseinrichtung 31. Der Laufunruhewert Lut wird dann mit einem Laufunruhekomparator 32 mit einen Schwellenwert TH verglichen. Sobald der Laufunruhewert Lut den Schwellenwert TH übersteigt, geht das Ausgangssignal des Laufunruhewertkomparators 32 vom Pegel L auf den Pegel H, was unzulässig viele Aussetzer im Verbrennungsmotor anzeigt.

Es ist nun offensichtlich so, daß dann, wenn Toleranzen des Geberrades noch gar nicht oder noch nicht zufriedenstellend adaptiert sind, der Laufunruhewert aufgrund toleranzbedingter Meßfehler erhöht ist. Daher ist es von Vorteil, den Schwellenwert TH in solcher Weise variabel zu gestalten, daß er bei noch ungenügender Adaption der Toleranzen höher ist als bei abgeschlossener Adaption. Zu diesem Zweck wird der Schwellenwert TH aus einem Kennfeld-Schwellenwert TH_KF, wie er abhängig von den aktuellen Werten der Drehzahl und der Last L des Verbrennungsmotors aus einem Kennfeld 33 ausgelesen wird, und einer Schwellenwertänderung ΔTH zusammengesetzt, die abhängig von der Größe des Lernfortschrittsignals FE_Sxy von einer Umrechnungseinrichtung 34 ausgegeben wird. Die Umrechnungseinrichtung 34 und eine Addiereinrichtung 35, in der das Signal TH_KF + ΔTH gebildet wird, bilden zusammen eine Modifiziereinrichtung 36, durch die der herkömmlich verwendete Schwellenwert TH_KF mit der Schwellenwertänderung ΔTH modifiziert wird.

Fig. 5 zeigt, wie sich der Laufunruhewert abhängig von der Drehzahl ändert, wenn er ganz alleine durch Geberradtoleranzen bedingt ist. Dabei ist angenommen, daß sich bei einer Toleranz des Meßsignals MS, die winkelmäßig ± 0,3° über eine Segmentlänge von 120° entspricht, was die obere mechanische Toleranz ist, bei 6000 U/min der Laufunruhewert 100 erhalten wird. Dieser Wert steigt in etwa exponentiell an, so daß er bei 3000 U/min nur ungefähr 25 beträgt. Gerade diese Werte müssen abhängig von der Drehzahl beim Schwellenwert TH berücksichtigt werden, so daß also bei fehlender Adaption die Schwellenwertänderung ΔTH bei 3000 U/min im Beispielsfall den Wert 25 und bei 6000 U/min den Wert 100 haben muß.

Zur Hinleitung auf die folgende Erläuterung des Funktionsblockschaltbilds der Fig. 7 sei angenommen, die Adaption sei für einen Bereich so Weit abgeschlossen, daß das Erfolgssignal Exy, z. B. das Erfolgssignal EB1, ausgegeben wird. Für diesen Bereich, hier also für den untersten Geschwindigkeitsbereich für das Segment B, sind damit die mechanischen und drehzahlbedingten Toleranzen adaptiert. Die Adaption der mechanischen Toleranzen gilt zugleich auch für die anderen Drehzahlbereiche. Das bedeutet, daß es sinnvoll ist, den für den einen Drehzahlbereich adaptierten Wert auch für die anderen Drehzahlbereiche zu übernehmen, in denen die Adaption noch nicht so weit fortgeschritten ist, daß das zugehörige Erfolgssignal ausgegeben wird. In diesem anderen Drehzahlbereich, z. B. dem Drehzahlbereich 2 für dasselbe Segment B, kann jedoch noch eine drehzahlbedingte Adaption erforderlich sein. Hier darf daher die Schwellenwertänderung ΔTH nicht auf Null zurückgenommen werden. Sie kann jedoch auf erheblich kleinere Werte verringert werden als im Fall der großen mechanischen Toleranzen. Versuche haben nämlich gezeigt, daß die drehzahlbedingten Toleranzen nur ungefähr bis zu ± 0,05° auf 120° betragen. Eine entsprechende Kurve für Laufunruhewerte, wie sie sich alleine bei Vorliegen eines solchen Fehlers ergeben, ist in Fig. 5 gestrichelt eingezeichnet. Es ist erkennbar, daß sich bei 6000 U/nin statt des Laufunruhewertes 100 nur noch etwa der Wert 35 und bei 3000 U/min nur noch etwa der Wert 8 einstellt. Entsprechend klein kann die Schwellenwertänderung ΔTH gewählt werden.

Eine Teilvorrichtung, die die eben erläuterte Erkenntnis nutzt, ist in Fig. 7 dargestellt. Diese Anordnung unterscheidet sich von der von Fig. 6 dadurch, daß die Modifiziereinrichtung 36 neben der Addiereinrichtung 35 nunmehr vier Modifizier-Untereinrichtungen 34.1 bis 34.4 statt der einen Modifiziereinrichtung 34 aufweist. Alle vier Modifizier-Untereinrichtungen erhalten das Erfolgssignal EB1 für das Segment B und den untersten Drehzahlbereich, der erfahrungsgemäß die Adaption deutlich am schnellsten erfolgt. Sobald dieses Erfolgssignal auf hohen Pegel geht, wird die Schwellenwertänderung ΔTH von dem in Fig. 5 mit der durchgezogenen Linie dargestellten Verlauf ΔTH_GROSS auf den Wert ΔTH = 0 umgeschaltet. In den drei anderen Modifizier-Untereinrichtungen 34.2 bis 34.4 wird dagegen auf den in Fig. 5 gestrichelt dargestellten Verlauf ΔTH_KLEIN umgeschaltet. In diesen drei Bereichen wird ΔTH erst dann auf Null gestellt, wenn das jeweilige Erfolgssignal EB2, EB3 bzw. EB4 auf hohen Pegel geht.

Die Varianten der Fig. 6 und 7 können auch kombiniert werden. D. h., daß in den Modifizier-Untereinrichtungen 34.1 bis 34.4 in Fig. 7 nicht nur eine große und eine kleine Schwellenwertänderung pro Drehzahl verwendet werden können, sondern daß wie in der Modifiziereinrichtung 34 in Fig. 6 die jeweils verwendete Schwellenwertänderung abhängig vom Wert des Lernfortschrittsignals FE_Sxy eingestellt werden kann.

Ferner ist es möglich, in der ersten Modifizier-Untereinrichtung 34.1 dann, wenn das Erfolgssignal EB1 ausgegeben wird, nicht sofort auf die Schwellenwertänderung Null umzuschalten, sondern zunächst die anhand von Fig. 4 geschilderte Überprüfung auf eine relativ große Bandbreite von Adaptionswerten innerhalb eines Drehzahlbereichs abzuwarten. D. h., daß dann, wenn das Erfolgssignal EB1 auf hohen Pegel geht, zunächst nur ein Umschalten von der großen auf die kleine Schwellenwertänderung erfolgt. Erst wenn sich mit Ablauf der anhand von Fig. 4 erläuterten Überprüfung ergibt, daß für den gesamten zugehörigen Drehzahlbereich, hier den Bereich 1, eine sehr schmalbandige Adaption möglich ist, wird auf die Schwellenwertänderung Null umgeschaltet. Decken die Adaptionswerte innerhalb des Bereichs dagegen wegen einer Resonanzstelle ein relativ breites Band ab, bleibt die Modifizierung des aus dem Kennfeld 33 ausgelesenen Schwellenwertes TH_KF mit der kleinen Schwellenwertänderung ΔTH_KLEIN erhalten.

Der Vollständigkeit halber sei darauf hingewiesen, daß in Fig. 7 die Modifiziereinrichtung 36' als für ein einziges Segment geltend, nämlich das Segment B, dargestellt ist. Es ist zu beachten, daß nicht unbedingt weitere unmittelbar entsprechende Modifiziereinrichtungen vorhanden sein müssen, wenn nämlich bei einem Anwendungsfall für alle Segmente zeitlich in gleichem Umfang adaptiert wird, so daß zu den durch die Modifiziereinrichtung 36' festgestellten Zeitpunkten entsprechende Änderungen wie in Zusammenhang mit dem Segment B ausgeführt auch in Zusammenhang mit den anderen Segmenten vorgenommen werden können. Zeigen die einzelnen Segmente dagegen bei einem Anwendungsfall stark unterschiedliche Lernfortschritte, ist für einen solchen Fall für jedes Segment eine Modifiziereinrichtung vorzusehen.

Es sei nochmals darauf hingewiesen, daß es bei der Berechnung von Laufunruhewerten nicht darauf ankommt, Drehzahlen absolut zu erfassen, sondern daß nur Drehzahländerungen sehr genau festgestellt werden müssen. Daher ist es sehr vorteilhaft, für ein Segment willkürlich eine bestimmte Länge anzunehmen und nur Abweichungen der Länge des mindestens einen weiteren Segments gegenüber der Länge dieses ausgewählten Segmentes zu erfassen. Dann müssen alle beschriebenen Adaptionen und Schwellenwertmodifizierungen nur für ein Segment weniger erfolgen als insgesamt Segmente vorhanden sind.

## Patentansprüche

1. Vorrichtung zur Adaption von Toleranzen bei der Messung winkelmäßiger Segmentlängen eines segmentierten Geberrades (10), mit
- einem Meßwertaufnehmer (11), der so in bezug auf das Geberrad ausgerichtet und so ausgebildet ist, daß er bei jeder Segmentbegrenzung ein Meßsignal (MS) ausgibt;
- jeweils einer Segmentlänge-Berechnungseinrichtung (12) zumindest für jedes Segment bis auf eines (d. h. für alle Segmente oder für ein Segment weniger), die so ausgebildet ist, daß sie aus zwei aufeinanderfolgenden Meßsignalen die Segmentlänge des zugeordneten Segments (x = A, B, C) bestimmt und einen entsprechenden Segmentlängenwert (XSx) ausgibt;
- jeweils einer Mittelungseinrichtung (17.x) für jedes Segment, die so ausgebildet ist, daß sie die Segmentlängenwerte für das zugeordnete Segment zu einem Adaptionswert (ASx) mittelt; und
- einer Drehzahl-Ermittlungseinrichtung (13);
**dadurch gekennzeichnet,** daß
- jede der Mittelungseinrichtungen (15.x) mindestens zwei Mittelungs-Untereinrichtungen (15.xy) aufweist, denen jeweils ein Drehzahlbereich (y = 1, 2, 3, 4) zugeordnet ist; und
- ein Drehzahlselektor (16.x) für jedes Segment vorhanden ist, der so angeschlossen ist und so ausgebildet ist, daß jede Mittelungs-Untereinrichtung nur solche Segmentlängenwerte erhält, die für den ihr zugeordneten Drehzahlbereich gelten.

2. Vorrichtung zur Adaption von Toleranzen bei der Messung winkelmäßiger Segmentlängen eines segmentierten Geberrades (10), mit
- einem Meßwertaufnehmer (11), der so in bezug auf das Geberrad ausgerichtet und so ausgebildet ist, daß er bei jeder Segmentbegrenzung ein Meßsignal (MS) ausgibt;
- jeweils einer Segmentlänge-Berechnungseinrichtung (12) zumindest für jedes Segment bis auf eines (d. h. für alle Segmente oder für ein Segment weniger), die so ausgebildet ist, daß sie aus zwei aufeinanderfolgenden Meßsignalen die Segmentlänge des zugeordneten Segments (x = A, B, C) bestimmt und einen entsprechenden Segmentlängenwert (XSx) ausgibt;
- jeweils einer Mittelungseinrichtung (17.x) für jedes Segment, die so ausgebildet ist, daß sie die Segmentlängenwerte für das zugeordnete Segment zu einem Adaptionswert (ASx) mittelt; und
- einer Drehzahl-Ermittlungseinrichtung (13);
**dadurch gekennzeichnet,** daß
- jede der Mittelungseinrichtungen (15.x) mindestens zwei Mittelungs-Untereinrichtungen (15.xy) aufweist, denen jeweils eine Drehzahl (y = 1, 2, 3, 4) zugeordnet ist; und
- eine Wichtungseinrichtung (21.x für jedes Segment vorhanden ist, die so angeschlossen und ausgebildet ist, daß jede Mittelungs-Untereinrichtung mit jedem Segmentlängenwert einen Gewichtungsfaktor, mit dem die Mittelung auszuführen ist, erhält, der um so kleiner ist, je mehr die aktuelle Drehzahl von der der Mittelungs-Untereinrichtung zugeordneten Drehzahl entfernt ist.

3. Vorrichtung nach einem der Ansprüche 1 oder 2, **dadurch gekennzeichnet,** daß mindestens einer Mittelungs-Untereinrichtung (15.B1) eine Lernfortschritt-Ermittlungseinrichtung (18; 19.B2, 19.B3, 19.B4) zugeordnet ist, die so ausgebildet ist, daß sie ermittelt, wie weit die Adaption in der zugeordneten Mittelungs-Untereinrichtung fortgeschritten ist, und die ein zugehöriges Lernfortschrittssignal (FE_Sxy) ausgibt.

4. Vorrichtung nach Anspruch 3, **gekennzeichnet durch** jeweils eine Vergleichseinrichtung (20.xy) in Zuordnung zu jeder Lernfortschritt-Ermittlungseinrichtung, welche Vergleichseinrichtung so ausgebildet ist, daß sie das Lernfortschrittssignal mit einem vorgegebenen Schwellenwert vergleicht und ein Erfolgssignal (Exy) ausgibt, wenn das Lernfortschrittssignal den Schwellenwert überkreuzt.

5. Vorrichtung nach Anspruch 4, **gekennzeichnet durch**
- einen Maximalwertspeicher (22) für mindestens ein ausgewähltes Segment und für jede diesem zugeordnete MittelungsUntereinrichtung (17.xy), der beim Auftreten des Erfolgssignals (Exy) auf den aktuellen Adaptionswert der zugeordneten Mittelungs-Untereinrichtung gesetzt wird und anschließend den maximal auftretenden Adaptionswert aus der zugeordneten Mittelungs-Untereinrichtung speichert;
- einen Minimalwertspeicher (23) für mindestens ein ausgewähltes Segment und für jede diesem zugeordnete Mittelungs-Untereinrichtung (17.xy), der beim Auftreten des Erfolgssignals (Exy) auf den aktuellen Adaptionswert der zugeordneten Mittelungs-Untereinrichtung gesetzt wird und anschließend den minimal auftretenden Adaptionswert aus der zugeordneten Mittelungs-Untereinrichtung speichert; und
- eine Differenzbildungseinrichtung (24), die die Differenz zwischen dem Maximalwert und dem Minimalwert bestimmt und ein entsprechendes Differenzsignal ausgibt.

6. Vorrichtung nach Anspruch 5, **gekennzeichnet durch** eine Bereichsverstelleinrichtung (25), die so ausgebildet ist, daß sie dann, wenn nach dem Auftreten des Erfolgssignals (E = xy) die Adaption so weit fortgeschritten ist, daß eine vorgegebene Prüfbedingung erfüllt ist, für eine Mittelungs-Untereinrichtung (17.xy), die Breite eines vorgegebenen Drehzahlbereichs im Fall der Vorrichtung von Anspruch 1, bzw. den Abstand mindestens einer vorgegebenen Drehzahl, die zu einer anderen vorgegebenen Drehzahl benachbart ist, vergrößert, wodurch ein neuer Vorgabewert erhalten wird, wenn das Differenzsignal für diese Mittelungs-Untereinrichtung unter eine Schwelle fällt, bzw. verkleinert, wenn er über eine Schwelle steigt.

7. Vorrichtung nach Anspruch 3, **dadurch gekennzeichnet,** daß jeder Mittelungs-Untereinrichtung (17.xy) eine Modifiziereinrichtung (36) zugeordnet ist, die so ausgebildet ist, daß sie einen Schwellenwert (TH), der zum Vergleich mit einer Größe (Lut) dient, die unter Verwendung des von der betreffenden Mittelungs-Untereinrichtung ausgegebenen Adaptionswertes (ASxy) berechnet wird, abhängig von der Größe des Lernfortschrittssignals (FE_Sxy) modifiziert.

8. Vorrichtung nach Anspruch 7 in Verbindung mit Anspruch 4, **dadurch gekennzeichnet,** daß die mehreren einem Segment x = A, B, C des Geberrades (10) zugeordneten Modifiziereinrichtungen (34.1 - 34.4) so ausgebildet sind, daß sie dann, wenn erstmals eine der zugeordneten Vergleichseinrichtungen (20.xy) ein Erfolgssignal (Exy) ausgibt, diejenigen Modifizier-Untereinrichtungen, die nicht zu derjenigen Vergleichseinrichtung gehören, die das Erfolgssignal ausgegeben hat, den Schwellenwert von einem hohen Anfangswert (TH_KF + ΔTH_GROSS) auf einen niedrigen Wert (TH_KF + ΔTH_KLEIN) verringern.

9. Vorrichtung nach Anspruch 8, **dadurch gekennzeichnet,** daß mindestens eine Modifiziereinrichtung (34.1) so ausgebildet ist, daß sie dann, wenn die ihr zugehörige Vergleichseinrichtung (20.B1) das Erfolgssignal ausgibt, die Schwellenwertänderung auf den Wert Null (ΔTH = 0) setzt.

10. Vorrichtung nach Anspruch 8 in Verbindung mit Anspruch 5, **dadurch gekennzeichnet,** daß mindestens eine Modifziereinrichtung so ausgebildet ist, daß sie dann, wenn die ihr zugehörige Vergleichseinrichtung das Erfolgssignal ausgibt, zunächst den Schwellenwert von einem hohen Anfangswert auf einen niedrigen Wert verringert und dann, wenn schließlich die Differenzbildungseinrichtung das Differenzsignal ausgibt und dieses unter einem vorgegebenen Vergleichswert liegt, die Schwellenwertänderung auf Null setzt.

## Claims

1. Device for adapting tolerances when measuring angular segment lengths of a segmented sensor wheel (10), having
- a pickup (11) which is aligned with the sensor wheel in such a way and designed in such a way that it outputs a measuring signal (MS) at each segment boundary;
- in each case one segment length calculating device (12) at least for each segment except for one (that is to say for all segments or for one segment less), which is designed in such a way that it determines the segment length of the assigned segment (x = A, B, C) from two successive measuring signals and outputs a corresponding segment length value (XSx);
- in each case one averaging device (17.x) for each segment, which is designed in such a way that it averages the segment length values for the assigned segment to form an adaptation value (ASx); and
- a rotational speed determining device (13);
characterized in that
- each of the averaging devices (15.x) has at least two component averaging devices (15.xy) to which in each case one rotational speed range (y = 1, 2, 3, 4) is assigned; and
- there is present for each segment a rotational speed selector (16.x), which is connected in such a way and designed in such a way that each component averaging device obtains only those segment length values which are valid for the rotational speed range assigned to it.

2. Device for adapting tolerances when measuring angular segment lengths of a segmented sensor wheel (10), having
- a pickup (11) which is aligned with the sensor wheel in such a way and designed in such a way that it outputs a measuring signal (MS) at each segment boundary;
- in each case one segment length calculating device (12) at least for each segment except for one (that is to say for all segments or for one segment less), which is designed in such a way that it determines the segment length of the assigned segment (x = A, B, C) from two successive measuring signals and outputs a corresponding segment length value (XSx);
- in each case one averaging device (17.x) for each segment, which is designed in such a way that it averages the segment length values for the assigned segment to form an adaptation value (ASx); and
- a rotational speed determining device (13);
characterized in that
- each of the averaging devices (15.x) has at least two component averaging devices (15.xy) to which in each case one rotational speed range (y = 1, 2, 3, 4) is assigned; and
- there is present for each segment a weighting device (21.x) which is connected in such a way and designed in such a way that each component averaging device obtains with each segment length value a weighting factor with which the averaging is to be performed and which is smaller the more the current rotational speed is remote from the rotational speed assigned to the component averaging device.

3. Device according to one of Claims 1 or 2, characterized in that at least one component averaging device (15.B1) is assigned a learning progress determining device (18; 19.B2, 19.B3, 19.B4) which is designed in such a way that it determines how far the adaptation has progressed in the assigned component averaging device, and which outputs an associated learning progress signal (FE_Sxy).

4. Device according to Claim 3, characterized by in each case one comparing device (20.xy) assigned to each learning progress determining device, which comparing device is designed in such a way that it compares the learning progress signal with a prescribed threshold value and outputs a success signal (Exy) when the learning progress signal crosses the threshold value.

5. Device according to Claim 4, characterized by
- a maximum value memory (22) for at least one selected segment and for each component averaging device (17.xy) assigned thereto, which upon the occurrence of the success signal (Exy) is set to the current adaptation value of the assigned component averaging device, and subsequently stores the maximum occurring adaptation value from the assigned component averaging device;
- a minimum value memory (23) for at least one selected segment and for each component averaging device (17.xy) assigned thereto, which upon the occurrence of the success signal (Exy) is set to the current adaptation value of the assigned component averaging device, and subsequently stores the minimum occurring adaptation value from the assigned component averaging device; and
- a subtracting device (24), which determines the difference between the maximum value and the minimum value and outputs a corresponding difference signal.

6. Device according to Claim 5, characterized by a range adjusting device (25) which is designed in such a way that, when the adaptation is so far advanced after the occurrence of the success signal (E = xy) that a prescribed test condition is fulfilled, for one component averaging device (17.xy) it increases the width of a prescribed rotational speed range in the case of the device of Claim 1, or the spacing of at least one prescribed rotational speed which is adjacent to another prescribed rotational speed, as a result of which a new stipulated value is obtained when the differential signal for said component averaging device falls below a threshold, or reduces it when it rises above a threshold.

7. Device according to Claim 3, characterized in that each component averaging device (17.xy) is assigned a modifying device (36) which is designed in such a way that it modifies as a function of the magnitude of the learning progress signal (FE_Sxy) a threshold value (TH) which serves the purpose of comparison with a magnitude (Lut) which is calculated using the adaptation value (ASxy) output by the relevant component averaging device.

8. Device according to Claim 7 in conjunction with Claim 4, characterized in that the plurality of modifying devices (34.1 - 34.4) assigned to a segment x = A, B, C of the sensor wheel (10) are designed in such a way that, when one of the assigned comparing devices (20.xy) outputs a success signal (Exy) for the first time those modifying devices which do not belong to that comparing device which has output the success signal reduce the threshold value from a high initial value (TH_KF + ΔTH_LARGE) to a low value (TH_KF + ΔTH_SMALL).

9. Device according to Claim 8, characterized in that at least one modifying device (34.1) is designed in such a way that when the comparing device (20.B1) associated with it outputs the success signal, it sets the threshold value variation to the value zero (ΔTH = 0).

10. Device according to Claim 8 in conjunction with Claim 5, characterized in that at least one modifying device is designed in such a way that when the comparing device associated with it outputs the success signal, it firstly reduces the threshold value from a high initial value to a low value and then, when finally the subtracting device outputs the differential signal and the latter is less than a prescribed reference value, sets the threshold value variation to zero.

## Revendications

1. Dispositif d'adaptation des tolérances de mesures de longueur de segments angulaires d'une roue phonique segmentée (10), comprenant :
- un capteur de valeur de mesure (11) aligné par rapport à la roue phonique et réalisé pour fournir un signal de mesure (MS) à chaque limite de segment,
- chaque fois une installation de calcul de longueur de segment (12) au moins pour chaque segment à l'exception d'un segment (c'est-à-dire pour tous les segments ou pour un segment en moins), celui-ci étant réalisé pour déterminer la longueur du segment associé (x = A, B, C) à partir de deux signaux de mesure successifs, et fournir une valeur de longueur de segment correspondante (XSx),
- chaque fois une installation de moyenne (17.x) pour chaque segment, cette installation étant réalisée pour faire la moyenne des valeurs de longueur de segments pour le segment associé, et donner une valeur d'adaptation (Asx), et
- une installation déterminant la vitesse de rotation (13),
caractérisé en ce que
- chaque installation de moyenne (15.x) comprend au moins deux sous-installations de moyenne (15.xy) auxquelles est associée chaque fois une plage de vitesses de rotation (y = 1, 2, 3, 4) ; et
- un sélecteur de vitesse de rotation (16.x) pour chaque segment, ce sélecteur étant branché et réalisé pour que chaque sous-installation de moyenne ne contienne que des valeurs de longueur de segments valables pour la plage des vitesses de rotation qui lui sont associées.

2. Dispositif d'adaptation des tolérances de mesures de longueur de segments angulaires d'une roue phonique segmentée (10), comprenant :
- un capteur de valeur de mesure (11) aligné par rapport à la roue phonique et réalisé pour émettre un signal de mesure (MS) à chaque limite de segment ;
- chaque fois une installation de calcul de longueur de segment (12) pour au moins chaque segment à l'exception d'un segment (c'est-à-dire pour tous les segments ou pour un segment en moins), réalisée pour déterminer la longueur du segment correspondant (x = A, B, C) et une valeur de longueur de segment correspondante (XSx), à partir de deux signaux de mesure successifs ;
- chaque fois une installation de moyenne (17.x) pour chaque segment, cette installation étant réalisée pour faire la moyenne des valeurs de longueur du segment associé et donner une valeur d'adaptation (ASx) ; et
- une installation déterminant la vitesse de rotation (13),
caractérisé en ce que
- chacune des installations de moyenne (15.x) comporte au moins deux sous-installations de moyenne (15.xy) auxquelles est associée chaque fois une vitesse de rotation (y = 1, 2, 3, 4) ; et
- une installation de pondération (21.x) pour chaque segment, cette installation étant branchée et réalisée pour que chaque sous-installation de moyenne reçoit, avec chaque valeur de longueur de segment, un coefficient de pondération pour effectuer la moyenne, ce coefficient étant d'autant plus petit que la vitesse de rotation actuelle est éloignée de la vitesse de rotation associée à la sous-installation de moyenne.

3. Dispositif selon l'une des revendications 1 ou 2,
caractérisé en ce qu'
à au moins une sous-installation de moyenne (15.B1) est associée une installation déterminant la progression d'apprentissage (18 ; 19.B2, 19.B3, 19.B4) réalisée pour déterminer la progression de l'adaptation dans la sous-installation de moyenne associée, et qui émet un signal de progrès d'apprentissage correspondant (FE_Sxy).

4. Dispositif selon la revendication 3,
caractérisé en ce que
chaque fois une installation de comparaison (20.xy) est réalisée en association avec chaque installation déterminant le progrès d'apprentissage, cette installation de comparaison comparant le signal de progrès d'apprentissage à une valeur de seuil prédéterminée pour émettre un signal de réussite (Exy) lorsque le signal de progrès d'apprentissage croise le seuil dans le sens ascendant.

5. Dispositif selon la revendication 4,
caractérisé par
- une mémoire de valeur maximale (22) pour au moins un segment sélectionné et pour chacune des sous-installations de moyenne (17.xy) associées, et qui, à l'apparition du signal de réussite (Exy), est mise à la valeur d'adaptation actuelle de la sous-installation de moyenne correspondante puis met en mémoire la valeur d'adaptation maximale produite par la sous-installation de moyenne associée ;
- une mémoire de valeur minimale (23) pour au moins un segment choisi et qui, pour chacune de ces sous-installations de valeur moyenne associées (17.xy), est mise à la valeur d'adaptation actuelle de la sous-installation de moyenne associée à l'apparition du signal de réussite (Exy), puis met en mémoire la valeur d'adaptation minimale produite par la sous-installation de moyenne associée ; et
- une installation de différence (24) qui définit la différence entre la valeur maximale et la valeur minimale, et fournit un signal de différence correspondant.

6. Dispositif selon la revendication 5,
caractérisé par
une installation de réglage de plage (25) d'une sous-installation de moyenne (17.xy) qui augmente la largeur d'une plage de vitesses de rotation prédéterminée dans le cas du dispositif de la revendication 1 ou la distance d'au moins une vitesse de rotation prédéterminée, voisine d'une autre vitesse de rotation prédéterminée, si après l'apparition du signal de réussite (E = xy) l'adaptation a tellement progressé qu'une condition de contrôle prédéterminée est satisfaite, pour donner une nouvelle valeur prédéterminée, pour cette sous-installation de valeur moyenne si la différence de signal descend en dessous d'un seuil, ou diminue lorsqu'elle dépasse un seuil.

7. Dispositif selon la revendication 3,
caractérisé en ce qu'
une installation de modification (36) pour modifier une valeur de seuil (TH) servant à la comparaison à une grandeur (Lut) calculée en utilisant la valeur d'adaptation (ASxy) émise par la sous-installation de moyenne concernée, est associée à chaque sous-installation de valeur moyenne (17.xy) pour être modifiée en fonction de l'amplitude du signal de progrès d'apprentissage (FE_Sxy).

8. Dispositif selon la revendication 7 en combinaison avec la revendication 4,
caractérisé en ce que
les différentes installations de modification (34.1-34.4) associées à un segment (x = A, B, C) de la roue phonique (10) sont réalisées pour que, lorsque l'une des installations de comparaison (20.xy) associées émet pour la première fois, un signal de réussite (Exy), elle diminue, pour les sous-installations modifiées qui n'appartiennent pas à l'installation de comparaison ayant émis le signal de réussite, la valeur de seuil à partir d'une valeur initiale élevée (TH_KF + ΔTH_GRAND) jusqu'à une valeur faible (TH_KF + ΔTH_PETIT).

9. Dispositif selon la revendication 8,
caractérisé en ce qu'
au moins une installation de modification (34.1) met la variation de la valeur de seuil à la valeur zéro (ΔTH = 0) si l'installation de comparaison (20.B1) associée émet le signal de réussite.

10. Dispositif selon la revendication 8 en liaison avec la revendication 5,
caractérisé en ce qu'
au moins une installation de modification diminue tout d'abord la valeur de seuil à partir d'une valeur initiale jusqu'à une valeur plus faible si l'installation de comparaison associée émet le signal de réussite, puis, lorsque finalement l'installation formant la différence émet le signal de différence et que ce dernier est inférieur à une valeur de comparaison prédéterminée, elle met à zéro la variation de la valeur de seuil.
